# EUROPEAN PATENT SPECIFICATION

(11) **EP 0 489 917 B1**
(45) Date of publication and mention of the grant of the patent: **24.01.1996**
(21) Application number: 91906507.8
(22) Date of filing: 01.04.1991
(51) Int. Cl.: H04M 1/64, H04M 11/06, H04N 1/32

(54) **COMPOSITE TELEPHONE SET**
KOMBINIERTER TELEFONAPPARAT
APPAREIL TELEPHONIQUE MIXTE

(30) Priority: 04.04.1990 JP 89928/90
(43) Date of publication of application: 17.06.1992
(73) Proprietor: MATSUSHITA ELECTRIC INDUSTRIAL CO., LTD., Kadoma-shi, Osaka-fu, 571 (JP)
(72) Inventor: TANAKA, Seiji, 19-8-103, Yanase 1-chome, Fukuoka-shi Fukuoka 816 (JP)
(74) Representative: Senior, Alan Murray
(86) International application number: JP9100431
(87) International publication number: WO9115913

(56) References cited:
- JP-A- 1 300 664
- JP-A-63 191 456
- JP-A-63 260 264
- US-A- 5 014 296

## Description

This invention relates to a composite telephone capable of automatically changing over its functions using a telephone number data from a caller.

### BACKGROUND

Recently, function of the telephone has been improved, and the facsimile has been popularized. Moreover, a composite telephone appears, having the both functions integrated.

Formerly, a composite telephone such as a facsimile with an answering telephone, in the automatic answering mode, makes connection with the telephone line automatically, then, determine whether the partner is a facsimile or not by observing an input signal from the partner's line, and selects either of that the facsimile is operated or that the answering telephone is operated.

Hereinbelow will be described the above-mentioned prior art composite telephone with reference to drawings.

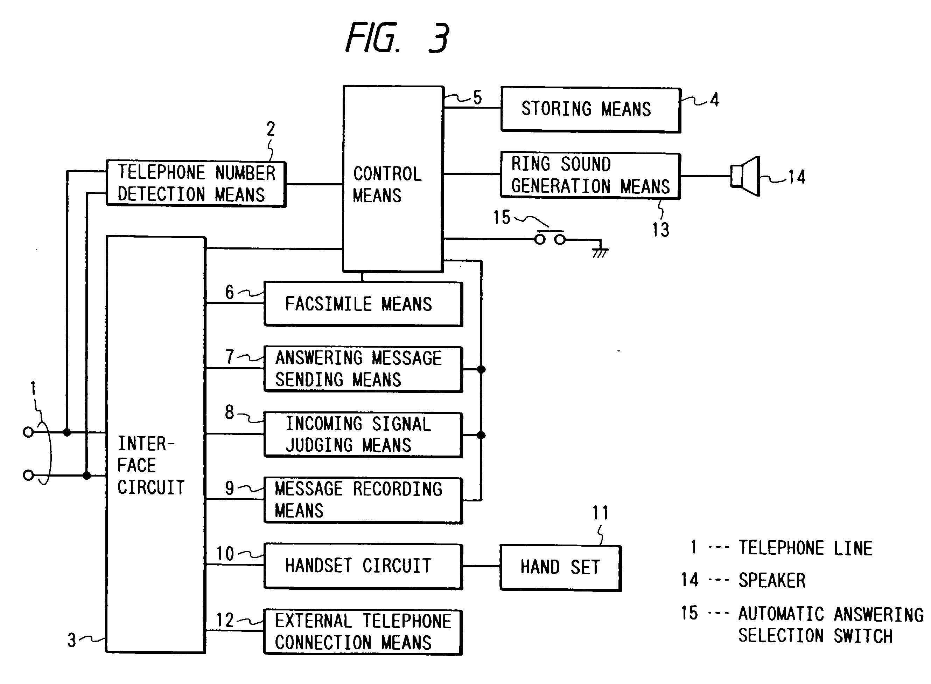

Fig. 3 shows structure of a prior art composite telephone. In Fig. 3, numeral 1 is a telephone line, numeral 2 is ring signal detection means, numeral 3 is an interface circuit, numeral 4 is storing means for storing various operations, numeral 5 is control means, numeral 6 is facsimile communication means as data communication means, numeral 7 is answering message (hereinafter referred to as OGM) sending means, numeral 8 is incoming signal judging means, numeral 9 is massage (hereinafter referred to as ICM) recording means as signal recording means incoming from the telephone line, numeral 10 is a sending and receiving circuit, numeral 11 is a hand set, numeral 12 is external telephone connecting means, numeral 13 is ring sound generation means, numeral 14 is a speaker, and numeral 15 is an automatic answering selection switch.

Hereinbelow will be described relations between structural elements and operation of the composite telephone comprising the above-mentioned structural elements.

At first, the ring signal detection means 2 of the composite telephone detects a ring signal from a not-shown central exchange office and its output is sent to the control means 5. The control means 5 generates a ring sound signal by ring sound generation means 13 and it is outputted from a speaker 14.

In the case that the automatic answering selection switch 15 is in ON-state, the control means 5 causes the interface circuit 3 to make connection with the telephone line 1. After completion of making connection of the telephone line 1, the control means 5 causes the OGM sending means 7 to send an OGM as well as causes the incoming signal judging means 8 to observe the signal incoming from the telephone line 1 through the interface circuit 3. When the caller sends a facsimile demand signal for demanding facsimile communication (for example, DTMF signal), the incoming signal judging means 8 detects this signal and sends its output signal to the control means 5. The control signal 5 causes the OGM sending means 7 to stop sending of the OGM and to operate the facsimile communication means 6 to start facsimile communication.

In the case that the facsimile communication demand signal from a caller is not inputted during sending the OGM, when sending of the OGM ends, the control means 5 operates a timer means included therein as well as operates the ICM recording means 9.

During this if the incoming judging means 8 detects a voice signal, the control means 5 resets operation of the internal timer and operates the massage recording means 9 as it is.

When the incoming judging means 8 detects the silence for a given interval detected by counting of the timer or when the facsimile communication start signal is detected, the control means 5 does not cause recording operation by the ICM recording means but causes the facsimile communication means 6 to start facsimile communication.

However, according to the above-mentioned structure, there is a problem that a considerable interval is necessary to start the facsimile communication because switching to the facsimile communication is made after judging whether the partner telephone is a facsimile or not in accordance with the signal inputted after the making of connection with the telephone line.

Moreover, particularly, in the case of a facsimile communication, there is a specification that communication shall start within a predetermined interval after the caller sends its telephone number. As the result, there is also a problem that facsimile communication cannot be executed when an excessive interval has passed up to judgement.

JP-A-63-191456 discloses a composite telephone including means to perform the functions of an answering machine and a facsimile as well as an ordinary telephone.

In order to resolve the problem of the above-mentioned prior art, this invention provides a composite telephone, as defined in claim 1, capable of shortening the response interval by selectively operating either of the data communication apparatus or the answering telephone using caller's-telephone-number-indicating function whose service has been started, that is, in accordance with the telephone number of the caller input at the same instance as the ring signal.

### BRIEF DESCRIPTION OF THE DRAWINGS

Fig. 1 shows structure of an embodiment of the invention of a composite telephone, Fig. 2 shows a flow chart showing operation of automatic answering operation of the embodiment of the invention and Fig. 3 shows structure of a prior art telephone.

### PREFERRED EMBODIMENTS OF THE INVENTION

Hereinbelow will be described an embodiment of the invention with reference to drawings.

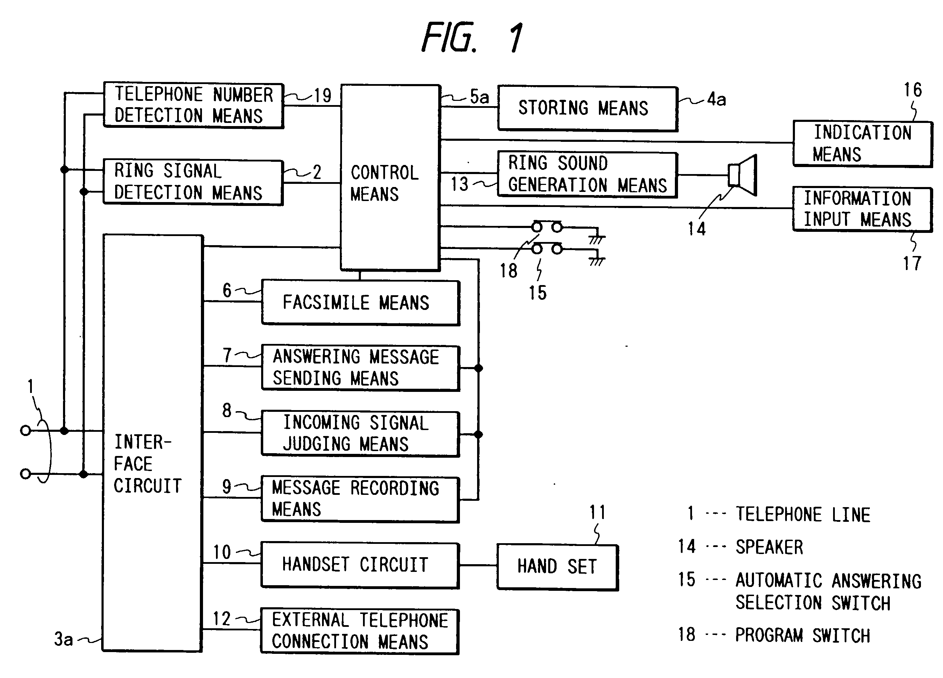

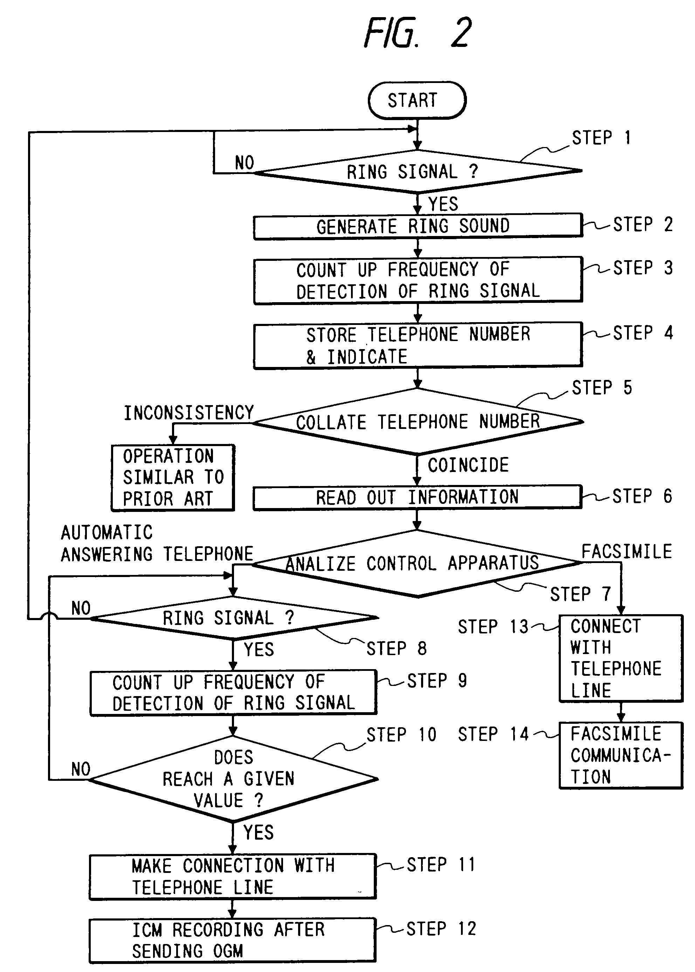

Fig. 1 shows a structure of the embodiment of the invention of a composite telephone. Fig. 2 shows a flow chart showing its operation. In Fig. 1, numeral 3a is an interface circuit, numeral 4a is a storing means, numeral 5a is control means, numeral 16 is indication means, numeral 17 is information input means, numeral 18 is a program switch, and numeral 19 is telephone number detection means.

The elements having the same functions as those of the prior art are designated as the same references and their descriptions are omitted.

Hereinbelow will be described relatidns between respective structural elements and operation of the composite telephone comprising the above-mentioned structural elements.

At first, registration operation of telephone numbers will be described. This apparatus enters a program mode by depressing a program switch 18. A telephone number is input through the information input means 17 to indicate whether the automatic answering telephone portion comprising the OGM sending means 7 and the ICM recording means 9 or the facsimile communication means 6 is to be operated when a call from this telephone number is detected on the telephone line 1. The control means 5a stores the information in the storing means 4a.

After the completion of registration operation, the program switch 18 is depressed again to end the program mode.

Then, the automatic answering operation will be described.

A ring signal from the telephone line 1 is observed (step 1). When the ring signal detection means 2 detects the ring signal in response to input of the ring signal, a ring sound is generated (step 2) as similar to the conventional manner. Moreover, the control means 5a counts up the detections of the ring signal (step 3).

The telephone number detection means 19 detects a caller's telephone number following the first ring signal, input from the telephone line 1 and stores the detected telephone number in the storing means 4a and indicates it by the indication means 16 (step 4).

Here, the control means 5a collates the telephone number of the caller inputted from the telephone line 1 with telephone numbers registered in the storing means 4a (step 5). If it is registered, the control means reads out the information recorded with correspondence to the telephone number, which indicates either of that the automatic answering telephone portion comprising the OGM sending means 7 and ICM recording means 9 is operated or that the facsimile communication means 6 is operated (step 6). At this instance, if the operation mode is in the automatic answering telephone mode and the information indicates that the answering telephone portion is operated (step 7), the control means 5a confirms that the ring signal detection means detects continuation of the ring signal after this (step 8). If it detects continuation of the ring signal, the control means counts up the detections of the ring signal (step 9). Then, the control means 5a judges whether the number of times the ring signal is detected reaches a predetermined number (step 10). If the number reaches the predetermined number, the control means causes the interface circuit 3a to make connection with the telephone line 1 (step 11). Then, the control means causes the OGM sending means 7 to send an OGM to the caller and then, it causes the ICM recording means 9 to operate to record a message sent from the caller after completion of sending the OGM (step 12). If the operation mode is not in the automatic answering telephone mode but in the ordinal operation mode, generation of the ring sound is continued until the user makes OFF-HOOK.

Then, in step 7, when the information stored in the storing means 4a indicates that the facsimile communication means is operated, the control means 5a immediately causes the interface circuit 3a to make connection with the telephone line 1 (step 13) and causes the facsimile means to operate (step 14).

In step 5, if the telephone number inputted from the telephone line 1 does not coincides any telephone number stored in the storing means 4a, in the case that the telephone number is not stored in the storing means 4a, or in the case that the telephone number data is not inputted from the telephone line 1, the control means causes the OGM sending means 7 to send the OGM after completion of connection with the telephone line 1 as similar to the prior art operation. Then, if the incoming signal judging means 8 detects the facsimile demand signal or the facsimile communication start signal or mute over a given interval, it causes the facsimile communication means 6 to operate. If the incoming signal judging means 8 detects a voice signal, it causes the ICM recording means 9 to operate.

The facsimile communication as data communication has been described as an example. However, as a matter of course, this invention can deal with other data communication such as personal computer communication which is possible to be used in future by only changing the contents stored in the memory. The number of kinds of communication is not limited to two but can be three or four.

### POSSIBILITY OF INDUSTRIAL APPLICATION

According to the above-mentioned structure, the control means collates the telephone number data sent from an exchange through the telephone line with the telephone numbers stored in the storing means, if they agree with each other, the control means automatically determines whether or not the facsimile means is to be operated or not on the basis of the information stored in relation with the telephone number. Therefore, though the apparatus is set to the automatic answering telephone mode, if the caller is a special terminal such as a facsimile, it is possible to start operation corresponding to caller's terminal automatically without operation of sending a answering message. Moreover, it is possible to start operation before connection with the telephone line, so that the response interval can be shortened and to prevent bad connection.

## Claims

1. A composite telephone for connection to a telephone line (1), the telephone comprising: ring signal detection means (2) for detecting a ring signal input from the telephone line (1); interface means (3a) for automatically connecting to the telephone line when the ring signal is input; a telephone portion (10,11) for receiving a voice signal input from the telephone line and for sending a voice signal to the telephone line; and data communication means (6) for performing data communication; characterised by: telephone number detection means (19) for detecting telephone number data input from the telephone line; storing means (4a) for storing telephone numbers and for storing information in relation with said telephone numbers, the information indicating either of said telephone portion or data communication means; and control means (5a) for collating a telephone number detected by said telephone number detection means with the telephone numbers stored in said storing means and selecting for operation either said telephone portion or said data communication means in accordance with said information stored in relation with the telephone number when detected and stored telephone numbers coincide.

2. A telephone according to claim 1 wherein said telephone portion comprises an automatic answering telephone portion having answering message sending means (7) for sending an answering message and incoming signal recording means (9) for recording a signal input from the telephone line.

3. A telephone according to claim 2 wherein said control means is adapted to control said interface means, when information read out from said storing means indicates the telephone portion, to connect to the telephone line when said ring signal detection means detects the ring signal a predetermined number of times; and when information read out from said storing means indicates the data communication means, to connect to the telephone line immediately.

## Patentansprüche

1. Kombiniertes Telefon zur Verbindung mit einer Telefonleitung (1) mit: einer Klingelsignal-Erfassungseinrichtung (2) zum Erfassen eines Klingelsignals, das über die Telefonleitung (1) eingegeben ist, einer Schnittstelleneinrichtung (3a) zum automatischen Verbindungsaufbau mit der Telefonleitung, wenn das Klingelsignal eingegeben ist, einem Telefonabschnitt (10, 11) zum Empfangen eines Sprachsignals, das über die Telefonleitung eingegeben ist, und zum Senden eines Sprachsignals an die Telefonleitung, und einer Datenkommunikationseinrichtung (6) zum Durchführen einer Datenkommunikation, gekennzeichnet durch eine Telefonnummer-Erfassungseinrichtung (19) zum Erfassen von Telefonnummer-Daten, die über die Telefonleitung eingegeben sind, einer Speichereinrichtung (4a) zum Speichern von Telefonnummern und zum Speichern von Information im Verhältnis zu den Telefonnummern, wobei die Information entweder den Telefonabschnitt oder die Datenkommunikationseinrichtung bezeichnet, und eine Steuereinrichtung (5a) zum Vergleichen einer Telefonnummer, die durch die Telefonnummer-Erfassungseinrichtung erfaßt wurde, mit den in der Speichereinrichtung gespeicherten Telefonnummern und zum Auswählen einer Betriebsart entweder des Telefonabschnitts oder der Datenkommunikationseinrichtung in Übereinstimmung mit der Information, die im Verhältnis zu der Telefonnummer gespeichert ist, wenn die erfaßten und die gespeicherten Telefonnummern übereinstimmen.

2. Telefon nach Anspruch 1, wobei der Telefonabschnitt einen Telefonabschnitt zum automatischen Beantworten mit einer Antwort-Nachricht-Sendeeinrichtung (7) zum Senden einer Antwort-Nachricht und einer EingangssignalAufzeichnungseinrichtung (9) zum Aufzeichnen eines über die Telefonleitung eingegebenen Signals aufweist.

3. Telefon nach Anspruch 2, wobei die Steuereinrichtung in der Lage ist, die Schnittstelleneinrichtung derart zu steuern, daß, wenn von der Speichereinrichtung ausgelesene Information den Telefonabschnitt anzeigt, die Telefonleitung erst dann verbunden wird, wenn die Klingelsignal-Erfassungseinrichtung das Klingelsignal mit einer vorbestimmten Häufigkeit erfaßt hat, und daß, wenn aus der Speichereinrichtung ausgelesene Information die Datenkommunikationseinrichtung anzeigt; die Telefonleitung sofort verbunden wird.

## Revendications

1. Téléphone mixte destiné à être connecté à une ligne téléphonique (1), ce téléphone comprenant: un moyen (2) de détection de signal d'appel destiné à détecter l'entrée d'un signal d'appel en provenance de la ligne téléphonique (1); un moyen d'interface (3a) destiné à établir une connexion automatique avec la ligne téléphonique lors de l'entrée du signal d'appel; une partie téléphone (10, 11) destinée à recevoir un signal vocal d'entrée en provenance de la ligne téléphonique et à envoyer un signal vocal à la ligne téléphonique; et un moyen (6) de communication de données pour effectuer une communication de données; caractérisé par: des moyens (19) de détection de numéro de téléphone pour détecter une entrée de données de numéro de téléphone, en provenance de la ligne téléphonique; un moyen de mémorisation (4a) pour mémoriser des numéros de téléphone et pour mémoriser des informations en relation avec lesdits numéros de téléphone, les informations indiquant soit ladite partie téléphone, soit le moyen de communication de données; et un moyen de commande (5a) pour collationner un numéro de téléphone détecté par ledit moyen de détection de numéro de téléphone avec les numéros de téléphone mémorisés dans ledit moyen de mémorisation et pour sélectionner le fonctionnement soit de ladite partie téléphone, soit dudit moyen de communication de données, en fonction desdites informations mémorisées en relation avec le numéro de téléphone quand les numéros de téléphone détecté et mémorisé coïncident.

2. Téléphone selon la revendication 1, dans lequel ladite partie téléphone comprend une partie téléphone à réponse automatique comportant un moyen (7) d'envoi de message de réponse pour envoyer un message de réponse et un moyen (9) d'enregistrement de signal entrant pour enregistrer un signal d'entrée en provenance de la ligne téléphonique.

3. Téléphone selon la revendication 2, dans lequel ledit moyen de commande est adapté pour commander audit moyen d'interface, quand l'information extraite dudit moyen de mémorisation indique la partie téléphone, d'établir une connexion avec la ligne téléphonique lorsque le moyen de détection de signal d'appel détecte le signal d'appel un nombre prédéterminé de fois, et, quand l'information extraite dudit moyen de mémorisation indique le moyen de communication de données, d'établir une communication avec la ligne téléphonique immédiatement.
